# EUROPEAN PATENT APPLICATION

(11) **EP 3 992 791 A1**
(43) Date of publication of application: **04.05.2022**
(21) Application number: 21154479.6
(22) Date of filing: 01.02.2021
(51) Int. Cl.: G06F 9/455, H04L 12/931

(54) **COMPUTING DEVICE WITH ETHERNET CONNECTIVITY FOR VIRTUAL MACHINES ON SEVERAL SYSTEMS ON A CHIP**

(30) Priority: 03.11.2020 EP 20205345
(71) Applicant: Elektrobit Automotive GmbH, 91058 Erlangen (DE)
(72) Inventor: Gepp, Helmut, 60488 Frankfurt am Main (DE); Gaderer, Georg, 60488 Frankfurt am Main (DE); Ziehensack, Michael, 60488 Frankfurt am Main (DE)
(74) Representative: Continental Corporation

(57) **Abstract**

The present invention is related to a computing device (CD), in particular for automotive applications, with Ethernet connectivity for virtual machines (VM1.1-VM3.2) on several systems on a chip (SoC1-SoC3). The invention is further related to a vehicle comprising such a computing device (CD). The computing device (CD) comprises two or more systems on a chip (SoC1-SoC3), each system on a chip (SoC1-SoC3) comprising one or more virtual machines (VM1.1-VM3.2), wherein one system on a chip (SoC1) provides a connection to an Ethernet network (ETH), and wherein the two or more systems on a chip (SoC1-SoC3) are connected by a switch (PCIe-SW). The virtual machines (VM1.1-VM3.2) are connected via a virtual Ethernet link. For this purpose, each system on a chip (SoC1-SoC3) comprises an instance of a distributed virtual switch (DVS), which is configured to provide a virtualized access to the Ethernet network (ETH) for the virtual machines (VM1.1-VM3.2) of the respective system on a chip (SoC1-SoC3).

## Description

The present invention is related to a computing device, in particular for automotive applications, with Ethernet connectivity for virtual machines on several systems on a chip. The invention is further related to a vehicle comprising such a computing device.

To provide Ethernet connectivity for virtual machines on several systems on a chip (SoC), there are two aspects that need to be considered. The first aspect is the provision of Ethernet connectivity to several SoCs, whereas the second aspect is the provision of Ethernet connectivity to virtual machines inside the SoCs. Existing solutions for these aspects have significant disadvantages for automotive applications, in particular with regard to costs, performance or non-compliance with mandatory automotive requirements.

With respect to the provision of Ethernet connectivity to several SoCs, several solutions are known.

According to one solution, all SoCs are provided with a dedicated network connection. Each SoC has a connection to a dedicated port of an Ethernet switch. The type of the port can be, e.g., a reduced gigabit media independent interface (RGMII), a peripheral component interconnect express (PCIe) interface, or a similar interface. However, as each SoC needs a separate connection to a dedicated port of an Ethernet switch, this solution is rather expensive and inefficient.

According to another solution, the SoCs are connected via PCIe and a PCIe switch with non-transparent bridge (NTB) ports. At least one SoC has an Ethernet network connection. On each SoC, an NTB-transport stack software is executed. The NTB-transport stack provides a connection to the other SoCs. A dedicated NTB-transport link to each SoC is used. The different links are connected via an Ethernet bridge in software, which distributes the traffic between the connected SoCs. At least on one SoC the Ethernet bridge has an additional port, which is connected to the Ethernet network. With this setup, each SoC can communicate with each other SoC and can, via the dedicated SoC with network connection, also communicate with the network. However, one or more additional Ethernet frame copies are necessary, which is handled by the NTB-transport stack, as data are not copied directly between virtual machines. In addition, the solution does not support full End-to-End Quality-of-Service requirements, e.g. blocking traffic from sources that exceed a specified bandwidth limit, or is more complex to implement, which causes additional CPU load. Furthermore, a spatial and temporal isolation between communication of virtual machines is not fully guaranteed. A further issue is that a PCIe switch with NTB ports is required. In the rather cost-sensitive automotive market, this might be a blocker.

According to another solution, the SoCs are connected via PCIe without a non-transparent bridge. However, there are currently no known implementations using this approach.

With respect to the provision of Ethernet connectivity to virtual machines inside the SoCs, several solutions are known.

According to one solution, a software-based virtualization of Ethernet connectivity inside the SoCs is used. To this end, the SoC Ethernet connection is used by a single virtual machine, which provides an Ethernet bridge in software. The other virtual machines can connect to these ports via an interprocess communication (IPC) mechanism, e.g. a shared memory. However, since the Ethernet connectivity virtualization inside the SoCs is done separately, this leads to additional Ethernet frame copies. This increases the CPU load on the SoCs and limits the data throughput.

According to another solution, a hardware-supported virtualization of Ethernet connectivity inside the SoCs is used. To this end, SoC Ethernet connection hardware is required that provides dedicated receive/transmit (Rx/Tx) queues and data processing mechanism, e.g. direct memory access (DMA) channels, for each virtual machine. For example, a PCIe network card with single-root input/output virtualization (SR-IOV) support may be used. However, this solution has the disadvantage that additional hardware is required.

It is an object of the present invention to provide an improved solution for providing Ethernet connectivity for virtual machines on several systems on a chip.

This object is achieved by a computing device according to claim 1. The dependent claims include advantageous further developments and improvements of the present principles as described below.

According to an aspect of the invention, a computing device comprise two or more systems on a chip, each system on a chip comprising one or more virtual machines, wherein one system on a chip provides a connection to an Ethernet network, and wherein the two or more systems on a chip are connected by a switch. The virtual machines are connected via a virtual Ethernet link, and each system on a chip comprises an instance of a distributed virtual switch, which is configured to provide a virtualized access to the Ethernet network for the virtual machines of the respective system on a chip. The instances of the distributed virtual switch preferably are configured to provide a virtual Ethernet link to each virtual machine of the respective system on a chip. Advantageously, the switch is a PCIe switch with or without a non-transparent bridge functionality.

According to the invention, a distributed virtual switch is used, i.e., a virtual switch distributed over the various SoCs. As the functionality is distributed among the instances of the distributed virtual switch, the processing load for network communication is balanced. The distributed virtual switch provides an optimized data path for Ethernet connectivity for each virtual machine in an environment with multiple SoCs, which are connected via a bus system, e.g., PCIe. Only one of the SoCs has a connection to an Ethernet switch. It is not necessary to provide an Ethernet connection to a dedicated port of the Ethernet switch for each SoC. Instead, the SoCs only need to be connected via a hardware connection. As fewer ports are required, the hardware requirements on the Ethernet switch are reduced. The distributed virtual switch provides a generic Ethernet communication control and data path to all virtual machines on all SoCs, i.e., each virtual machine on each SoC has a generic Ethernet communication path irrespective of whether the peer is on the same SoC or on another SoC or on the network.

The solution according to the invention may, for example, be implemented using a PCIe switch without NTB-functionality, which reduces the cost of the implementation. It can also be used for other resources that are used on several SoCs, e.g. for non-volatile memory accesses.

In an advantageous embodiment, the instances of the distributed virtual switch are software components that are executed in a privileged mode. In this way, it is ensured that the processor executing the respective software components may perform any operation allowed by its architecture. For example, the instances of the distributed virtual switch may be implemented as hypervisor extensions. Such a hypervisor is generally provided for managing and controlling the one or more virtual machines.

In an advantageous embodiment, each instance of the distributed virtual switch is configured to discover the instances of the distributed virtual switch of the other systems on a chip via the switch and to establish a dedicated communication channel to each other instance of the distributed virtual switch. In this way, the need to copy the Ethernet frames is reduced to a minimum. For example, a unicast Ethernet frame from one virtual machine to a virtual machine on another SoC is only copied a single time. This reduces the CPU load at the SoCs and increases the data throughput.

In an advantageous embodiment, for each virtual Ethernet link the instances of the distributed virtual switch are configured to handle frame transmission requests to local virtual machines using data transfer. Preferably, hardware-accelerated data transfer is used, e.g. direct memory access.

In an advantageous embodiment, for each virtual Ethernet link the instances of the distributed virtual switch are configured to serve frame transmission requests to virtual machines on a target system on a chip by forwarding the request to the instance of the distributed virtual switch on the target system on a chip and providing frame metadata including a data source address, such as a PCIe source address, a destination address or a VLAN tag. This may include virtual to physical address translation and physical address to PCIe address space translation. The distributed virtual switch provides an address translation between the guest physical address space of the virtual machine to the physical address followed to the PCIe address space used for PCIe DMA transactions on the SoC. In this way, no input-output memory management unit is needed, which is typically not available for embedded devices or does not support translation for multiple guest physical address spaces.

In an advantageous embodiment, the instances of the distributed virtual switch are configured to provide a spatial isolation of the communication related to the virtual machines. For example, the distributed virtual switch as an independent component can ensure that the data to be received and transmitted by any virtual machine are write protected and read protected against any other virtual machine.

This is an important aspect for an automotive grade network support for virtual machines on SoCs.

In an advantageous embodiment, the instances of the distributed virtual switch are configured to provide a temporal isolation between the virtual machines with regard to Ethernet communication. For example, the distributed virtual switch as an independent component can provide a temporal isolation between PCIe bus requests of virtual machines. Using a functionality of the hypervisor or an input-output memory management unit, only the distributed virtual switch gets access to the PCIe bus. The virtual machines do not have access to the PCIe bus at all. This mechanism prevents any virtual machine from intentionally or unintentionally overloading the PCIe bus. Furthermore, the distributed virtual switch as an independent component can provide a temporal isolation of communication of the virtual machines related to virtual functions. For example, the distributed virtual switch may limit the bandwidth or number of transmitted frames per virtual machine according to configured values.

In an advantageous embodiment, the instances of the distributed virtual switch are configured to scan outgoing and incoming Ethernet traffic from and to each virtual machine for metadata. The instances of the distributed virtual switch can then trigger defined actions. For example, the virtual switch may be configured to enforce further network separation, such as a VLAN (Virtual Local Area Network) for Ethernet. Furthermore, the virtual switch may be configured to block traffic from unauthorized sources or sources that exceed a bandwidth limit, to mirror traffic, or to generate traffic statistics on the level of the virtual machines.

In an advantageous embodiment, the instances of the distributed virtual switch are configured to scan ingress traffic and egress traffic and to perform plausibility checks. For example, the instances of the distributed virtual switch may check the match of a virtual machine to an SoC, the plausibility of MAC (Media-Access-Control) addresses, etc.

In an advantageous embodiment, the instance of the distributed virtual switch of the system on a chip providing the connection to the Ethernet network has exclusive access to an Ethernet network device. This has the advantage that all virtual machines are shielded from each other.

In an advantageous embodiment, for each virtual Ethernet link the instances of the distributed virtual switch are configured to serve a frame transmission request to the Ethernet network by forwarding the request to the instance of the distributed virtual switch of the system on a chip providing the connection to the Ethernet network. In this way, the distributed virtual switch on the target SoC is able to retrieve the next free Tx buffer from the Ethernet driver.

In an advantageous embodiment, the instance of the distributed virtual switch of the system on a chip providing the connection to the Ethernet network is configured to fetch data targeted to this Ethernet network from local virtual machines and from instances of the distributed virtual switch of remote systems on a chip. In this way, the frames to be transmitted are reliably provided to the Ethernet network.

In an advantageous embodiment, the instance of the distributed virtual switch of the system on a chip providing the connection to the Ethernet network is configured to serve received frames from the Ethernet network to local virtual machines using data transfer and to remote virtual machines by forwarding the frame metadata to the instance of the distributed virtual switch of the target system on a chip. In this way, an optimized communication from the Ethernet network to the virtual machines on the various SoCs is achieved.

Advantageously, a vehicle comprises a computing device according to the invention. The describes solution allows providing Ethernet connectivity for electronic control units (ECU) with several SoCs. This is gaining an increasing importance for automotive high performance computers (HPC), combined HPCs, which combine Interior/Network-HPC, advanced driver assistance systems and an infotainment HPC in one ECU, and applications in the field of advanced driver assistance systems in general. The automotive market is currently moving toward the usage of PCIe interfaces, especially for ECU internal communication. Using the described solution, the ECU costs can be significantly reduced.

Further features of the present invention will become apparent from the following description and the appended claims in conjunction with the figures.

### Figures

- Fig. 1: schematically illustrates a known solution for providing Ethernet connectivity for virtual machines on several SoCs;
- Fig. 2: schematically illustrates a solution according to the invention for providing Ethernet connectivity for virtual machines on several SoCs using a PCIe switch with a non-transparent bridge functionality;
- Fig. 3: schematically illustrates a solution according to the invention for providing Ethernet connectivity for virtual machines on several SoCs using a PCIe switch without a non-transparent bridge functionality;
- Fig. 4: schematically illustrates the transmission of a frame from a virtual machine on an SoC to a virtual machine on another SoC using the solution of Fig. 2; and
- Fig. 5: schematically illustrates the transmission of a frame from a virtual machine on an SoC without network connection to a network using the solution of Fig. 2.

### Detailed description

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, systems on a chip, microcontrollers, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

When Ethernet was introduced in the automotive industry, control units were usually connected via internal Ethernet controllers to Ethernet switches. With increasing performance requirements and tighter integration of several control units, high performance computers containing several independent virtual machines were introduced. In this case, virtual machine managers or hypervisors HV are used to partition several operating systems.

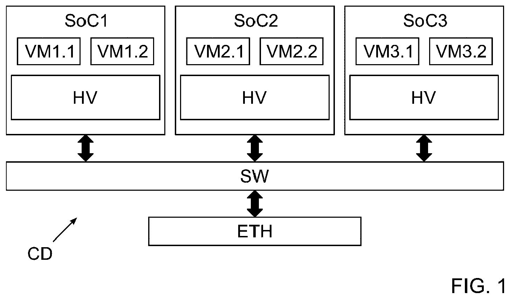

Fig. 1 schematically illustrates a known solution for providing Ethernet connectivity for virtual machines VM1.1-VM3.2 on several SoCs SoC1-SoC3 of a computing device CD. According to this solution, all SoCs SoC1-SoC3 are provided with a dedicated connection to an Ethernet network ETH. Each SoC SoC1-SoC3 has a connection to a dedicated port of an Ethernet switch SW. The type of the port can be, e.g., an RGMII interface or a PCIe interface.

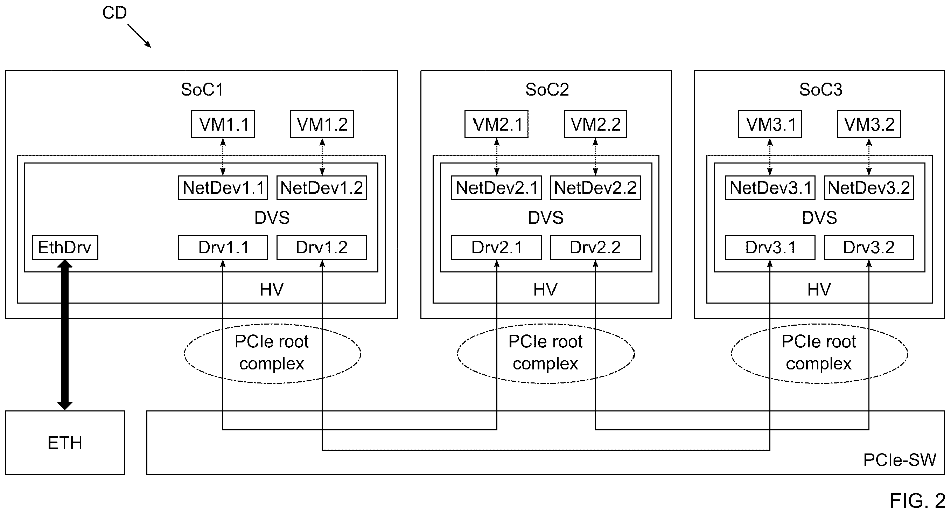

Fig. 2 schematically illustrates a solution according to the invention for providing Ethernet connectivity for virtual machines VM1.1-VM3.2 on several SoCs SoC1-SoC3 of a computing device CD using a switch PCIe-SW, in this example a PCIe switch, with a non-transparent bridge functionality. As can be seen, each SoC SoC1-SoC3 has a hardware connection to each other SoC SoC1-SoC3. This hardware connection supports remote direct memory accesses. A typical example for such a hardware connection is a PCIe connection via a PCIe switch PCIe-SW, which provides an NTB functionality for all SoCs SoC1-SoC3 so that all SoC SoC1-SoC3 can communicate via the non-transparent bridge with each other. However, also other types of hardware connection can be used. One SoC SoC1 has a connection to the Ethernet network ETH, which may be an automotive Ethernet network. This connection can be either separated from the PCIe switch PCIe-SW or also via the PCIe switch PCIe-SW. Each SoC SoC1-SoC3 has one or more guest operating systems, i.e. virtual machines VM1.1-VM3.2, which are created and run by a hypervisor HV. In this example, each of the three SoCs SoC1-SoC3 constitutes a PCIe root complex, i.e. they constitute masters. The PCIe switch PCIe-SW with NTB functionality ensures that no conflicts arise between the root complexes.

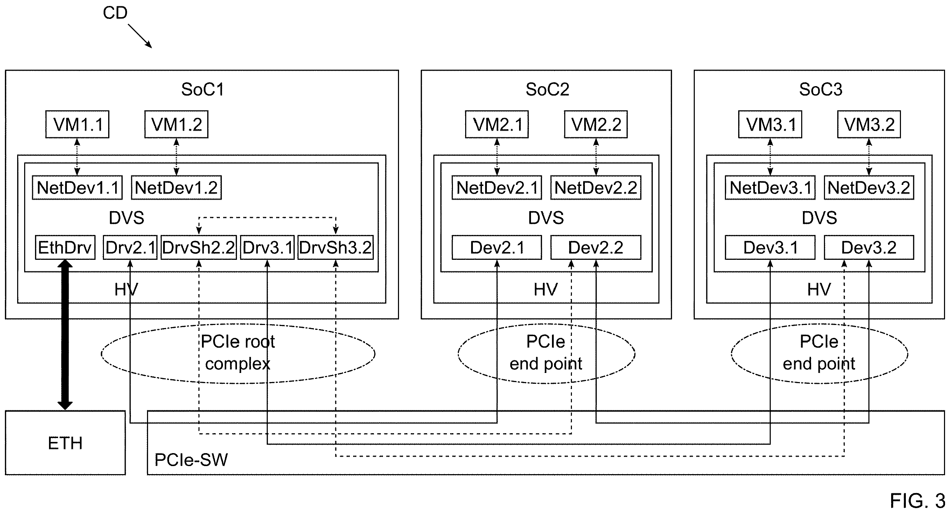

Fig. 3 schematically illustrates a similar solution, but using a switch PCIe-SW without a non-transparent bridge functionality. Also in this example the switch PCIe-SW is a PCIe switch. In this case the SoC SoC1 featuring the PCIe root complex must shadow initialization for the communication between devices Dev2.2-Dev3.2 of the respective other SoCs SoC2-SoC3, which are PCIe end points, as no spontaneous communication initialization is allowed. This is indicated by the dashed lines. To this end, shadow drivers DrvSh2.2-DrvSh3.2 are provided at the SoC SoC1 featuring the PCIe root complex. After initialization, a direct data exchange can take place, as indicated by solid arrow between Dev2.2 and Dev3.2.

According to the invention, for both solutions described above, a distributed virtual switch DVS is implemented on each SoC SoC1-SoC3. The distributed virtual switch DVS may be, for example, a software component running in privileged mode, e.g. as an extension of the hypervisor HV. The distributed virtual switch DVS provides an optimized Ethernet connectivity for each virtual machine VM1.1-VM3.2 on each SoC SoC1-SoC3 to other virtual machines VM1.1-VM3.2 on the same SoC SoC1-SoC3, to other virtual machines VM1.1-VM3.2 on different SoCs SoC1-SoC3, and to the Ethernet network ETH. For this purpose, the distributed virtual switch DVS provides a network device NetDev1.1-NetDev3.2 to each virtual machine VM1.1-VM3.2 running on the SoC SoC1-SoC3. The thin dotted arrows between the network devices NetDev1.1-NetDev3.2 and the virtual machines VM1.1-VM3.2 indicate transmit and receive queue accesses. In addition, the distributed virtual switch DVS provides for each other SoC SoC1-SoC3 one dedicated distributed virtual switch driver Drv1.1-Drv3.2, which is linked via the non-transparent bridge of the PCIe switch PCIe-SW to the respective distributed virtual switch driver Drv1.1-Drv3.2 of the other SoC SoC1-SoC3.

Each two linked distributed virtual switch drivers Drv1.1-Drv3.2 have a peer-to-peer communication. Each distributed virtual switch driver Drv1.1-Drv3.2 has a receive queue, which contains metadata of Ethernet frames, e.g. a destination MAC address, a VLAN tag, or a buffer address of an Ethernet frame transmitted by a virtual machine VM1.1-VM3.2. Each distributed virtual switch driver Drv1.1-Drv3.2 can insert an entry in the receive queue of its linked distributed virtual switch driver Drv1.1-Drv3.2 on the other SoC SoC1-SoC3. The distributed virtual switch DVS of the SoC SoC1 that is connected to the Ethernet network ETH further has access to an Ethernet network device, e.g. an Ethernet switch, via an Ethernet driver EthDrv.

Advantageously, the distributed virtual switch DVS further has additional information with regard to each virtual machine VM1.1-VM3.2, e.g. an allowed bandwidth, an arbitration priority between the queues of a virtual machine VM1.1-VM3.2 and between several virtual machines VM1.1-VM3.2, a guest physical address mapping, and so on. Because of this information and the full control of the configuration of the network connection, e.g. the Ethernet switch, and the data and control path of each virtual network device, those devices can guarantee a spatial and temporal separation.

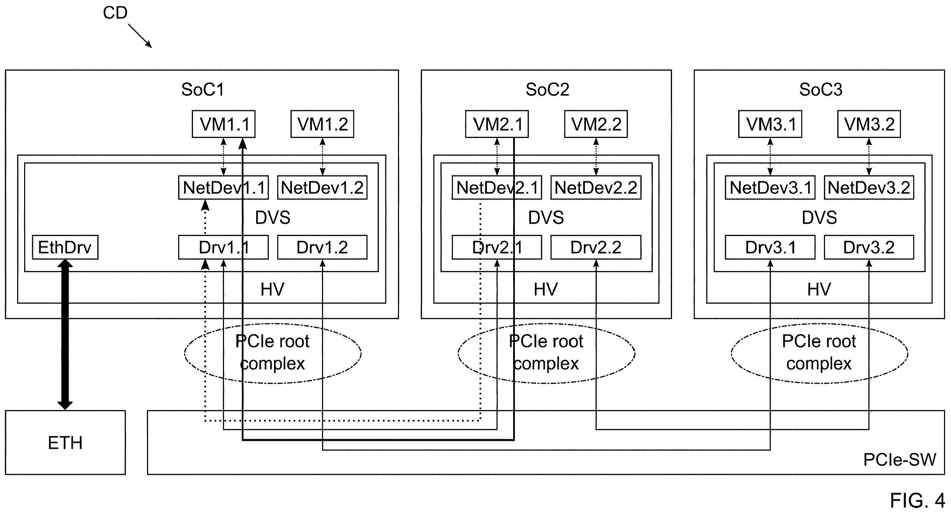

Fig. 4 schematically illustrates the transmission of a frame from a virtual machine VM2.1 on an SoC SoC2 to a virtual machine VM1.1 on another SoC SoC1 using the solution of Fig. 2. The source virtual machine VM2.1 transmits an Ethernet frame via a Tx queue access to the network device NetDev2.1, i.e. the source virtual machine VM2.1 puts the transmitted frame into the Tx queue. The distributed virtual switch DVS at the source virtual machine VM2.1 periodically checks the Tx queues of all available network devices NetDev2.1-NetDev2.2. It will thus detect the new available Tx frame and determines the target of the frame by reading address information of the frame, e.g. a destination MAC address or a VLAN tag. The distributed virtual switch DVS at the source virtual machine VM2.1 recognizes the other SoC SoC1 as the target of the frame based on a configured routing table. As a result, the distributed virtual switch DVS at the source virtual machine VM2.1 puts related metadata into the Rx queue of the linked distributed virtual switch driver Drv1.1 of the distributed virtual switch DVS at the target SoC SoC1. The related metadata includes address information of the frame, e.g. the destination MAC address or the VLAN tag, and a PCIe address of the Tx buffer with the transmitted frame. The metadata transfer, or more generally the control data access, is indicated by the thick dotted arrow. The insertion of the entry with metadata in the Rx queue of the target SoC SoC1 is then done via the distributed virtual switch driver Drv2.1 at the source virtual machine VM2.1, which performs a PCIe write to the linked distributed virtual switch driver Drv1.1 at the target SoC SoC1.

The distributed virtual switch DVS at the target SoC SoC1 periodically checks if there is a new entry in the Rx queue of the local distributed virtual switch drivers Drv1.1-Drv1.2. The distributed virtual switch DVS will thus detect the new entry with the metadata. With the help of the routing information in the metadata and based on a configured routing table, the distributed virtual switch DVS at the target SoC SoC1 determines that the destination of this frame is a virtual machine VM1.1 on this SoC SoC1. The distributed virtual switch DVS at the target SoC SoC1 thus retrieves the next free Rx buffer from the network device NetDev1.1 of the destination virtual machine VM1.1. The distributed virtual switch DVS at the target SoC SoC1 now sets up a DMA copy of the frame from the Tx buffer on the SoC SoC2 at the source virtual machine VM2.1 to this Rx buffer of the destination virtual machine VM1.1. The DMA copy is executed via a PCIe link and is indicated by the thick solid arrow between the source virtual machine VM2.1 and the destination virtual machine VM1.1. After the DMA copy is finished, the distributed virtual switch DVS at the target SoC SoC1 informs the destination virtual machine VM1.1 that a new frame has been received and provides the filled Rx buffer back to the virtual machine VM1.1. Furthermore, it informs the distributed virtual switch DVS at the source virtual machine VM2.1 that the frame copy is finished, and that the Tx buffer can be released. The distributed virtual switch DVS at the source virtual machine VM2.1 recognizes this information. It informs the source virtual machine VM2.1 that the transmission is finished and returns the Tx buffer back to the virtual machine VM2.1.

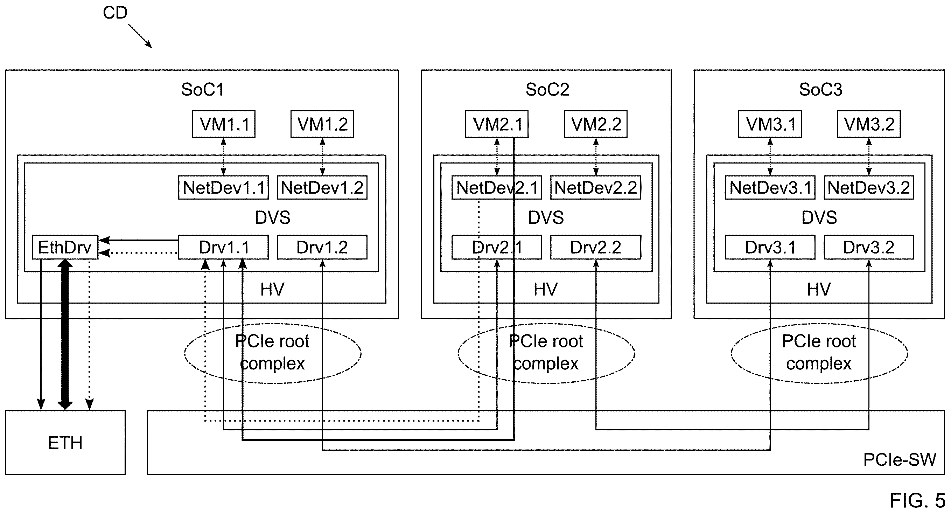

Fig. 5 schematically illustrates the transmission of a frame from a virtual machine VM2.1 on an SoC SoC2 without network connection to a network ETH using the solution of Fig. 2. The source virtual machine VM2.1 transmits an Ethernet frame via a queue access to the network device NetDev2.1, i.e. the source virtual machine VM2.1 puts the transmitted frame into the Tx queue. The distributed virtual switch DVS at the source virtual machine VM2.1 periodically checks the Tx queues of all available network devices NetDev2.1-NetDev2.2. It will thus detect the new available Tx frame and determines the target of the frame by reading address information of the frame, e.g. a destination MAC address or a VLAN tag. The distributed virtual switch DVS at the source virtual machine VM2.1 recognizes the other SoC SoC1 as the target of the frame based on a configured routing table. As a result, the distributed virtual switch DVS at the source virtual machine VM2.1 puts related metadata into the Rx queue of the linked distributed virtual switch driver Drv1.1 of the distributed virtual switch DVS at the target SoC SoC1. The related metadata includes address information of the frame, e.g. the destination MAC address or the VLAN tag, and a PCIe address of the Tx buffer with the transmitted frame. The metadata transfer, or more generally the control data access, is indicated by the thick dotted arrow. The insertion of the entry with metadata in the Rx queue of the target SoC SoC1 is then done via the distributed virtual switch driver Drv2.1 at the source virtual machine VM2.1, which performs a PCIe write to the linked distributed virtual switch driver Drv1.1 at the target SoC SoC1.

The distributed virtual switch DVS at the target SoC SoC1 periodically checks if there is a new entry in the Rx queue of the local distributed virtual switch drivers Drv1.1-Drv1.2. The distributed virtual switch DVS will thus detect the new entry with the metadata. With the help of the routing information in the metadata and based on a configured routing table, the distributed virtual switch DVS at the target SoC SoC1 determines that the destination of this frame is the network ETH. The distributed virtual switch DVS at the target SoC SoC1 thus retrieves the next free Tx buffer from the Ethernet driver EthDrv of the network device. The distributed virtual switch DVS at the target SoC SoC1 now sets up a DMA copy of the frame from the Tx buffer on the SoC SoC2 at the source virtual machine VM2.1 to this Tx buffer of the Ethernet driver EthDrv of the network device. The DMA copy is executed via a PCIe link and is indicated by the thick solid arrow between the source virtual machine VM2.1 and the network ETH. After the DMA copy is finished, the distributed virtual switch DVS at the target SoC SoC1 informs the network device that a new frame for transmission is available. Furthermore, it informs the distributed virtual switch DVS at the source virtual machine VM2.1 that the frame copy is finished, and that the Tx buffer can be released. The network device then reads the new frame for transmission and transmits the frame. The distributed virtual switch DVS at the source virtual machine VM2.1 recognizes that the frame copy is finished. It informs the source virtual machine VM2.1 that the transmission is finished and returns the Tx buffer back to the virtual machine VM2.1.

## Claims

1. A computing device (CD) comprising two or more systems on a chip (SoC1-SoC3), each system on a chip (SoC1-SoC3) comprising one or more virtual machines (VM1.1-VM3.2), wherein one system on a chip (SoC1) provides a connection to an Ethernet network (ETH), and wherein the two or more systems on a chip (SoC1-SoC3) are connected by a switch (PCIe-SW), **characterized in that** the virtual machines (VM1.1-VM3.2) are connected via a virtual Ethernet link, and **in that** each system on a chip (SoC1-SoC3) comprises an instance of a distributed virtual switch (DVS), which is configured to provide a virtualized access to the Ethernet network (ETH) for the virtual machines (VM1.1-VM3.2) of the respective system on a chip (SoC1-SoC3).

2. The computing device (CD) according to claim 1, wherein the switch (PCIe-SW) is a PCIe switch with or without a non-transparent bridge functionality.

3. The computing device (CD) according to claim 1 or 2, wherein the instances of the distributed virtual switch (DVS) are configured to provide a virtual Ethernet link to each virtual machine (VM1.1-VM3.2) of the respective system on a chip (SoC1-SoC3).

4. The computing device (CD) according to one of the preceding claims, wherein the instances of the distributed virtual switch (DVS) are software components that are executed in a privileged mode.

5. The computing device (CD) according to one of the preceding claims, wherein each instance of the distributed virtual switch (DVS) is configured to discover the instances of the distributed virtual switch (DVS) of the other systems on a chip (SoC1-SoC3) via the switch (PCIe-SW) and to establish a dedicated communication channel to each other instance of the distributed virtual switch (DVS).

6. The computing device (CD) according to one of the preceding claims, wherein for each virtual Ethernet link the instances of the distributed virtual switch (DVS) are configured to handle frame transmission requests to local virtual machines (VM1.1-VM3.2) using data transfer.

7. The computing device (CD) according to claim 5, wherein for each virtual Ethernet link the instances of the distributed virtual switch (DVS) are configured to serve frame transmission requests to virtual machines (VM1.1-VM3.2) on a target system on a chip (SoC1-SoC3) by forwarding the request to the instance of the distributed virtual switch (DVS) on the target system on a chip (SoC1-SoC3) and providing frame metadata including a data source address, a destination address, or a VLAN tag.

8. The computing device (CD) according to one of the preceding claims, wherein the instances of the distributed virtual switch (DVS) are configured to provide a spatial isolation of the communication related to the virtual machines (VM1.1-VM3.2), or to provide a temporal isolation between the virtual machines (VM1.1-VM3.2) with regard to Ethernet communication.

9. The computing device (CD) according to one of the preceding claims, wherein the instances of the distributed virtual switch (DVS) are configured to scan outgoing and incoming Ethernet traffic from and to each virtual machine (VM1.1-VM3.2) for metadata.

10. The computing device (CD) according to one of the preceding claims, wherein the instances of the distributed virtual switch (DVS) are configured to scan ingress traffic and egress traffic and to perform plausibility checks.

11. The computing device (CD) according to one of the preceding claims, wherein the instance of the distributed virtual switch (DVS) of the system on a chip (SoC1) providing the connection to the Ethernet network (ETH) has exclusive access to an Ethernet network device.

12. The computing device (CD) according to one of the preceding claims, wherein for each virtual Ethernet link the instances of the distributed virtual switch (DVS) are configured to serve frame transmission request to the Ethernet network (ETH) by forwarding the request to the instance of the distributed virtual switch (DVS) of the system on a chip (SoC1) providing the connection to the Ethernet network (ETH).

13. The computing device (CD) according to one of the preceding claims, wherein the instance of the distributed virtual switch (DVS) of the system on a chip (SoC1) providing the connection to the Ethernet network (ETH) is configured to manage fetching data targeted to this Ethernet network (ETH) from local virtual machines (VM1.1-VM1.2) and from instances of the distributed virtual switch (DVS) of remote systems on a chip (SoC2-SoC3).

14. The computing device (CD) according to one of the preceding claims, wherein the instance of the distributed virtual switch (DVS) of the system on a chip (SoC1) providing the connection to the Ethernet network (ETH) is configured to serve received frames from the Ethernet network (ETH) to local virtual machines (VM1.1-VM1.2) using data transfer and to remote virtual machines (VM2.1-VM3.2) by forwarding the frame metadata to the instance of the distributed virtual switch (DVS) of the target system on a chip (SoC2-SoC3).

15. A vehicle, **characterized in that** the vehicle comprises a computing device (CD) according to one of the preceding claims.

## Amended claims

### Amended claims in accordance with Rule 137(2) EPC.

1. A computing device (CD) comprising two or more systems on a chip (SoC1-SoC3), each system on a chip (SoC1-SoC3) comprising one or more virtual machines (VM1.1-VM3.2), wherein one system on a chip (SoC1) provides a connection to an Ethernet network (ETH), wherein the two or more systems on a chip (SoC1-SoC3) are connected by a switch (PCIe-SW), and wherein each system on a chip (SoC1-SoC3) comprises an instance of a distributed virtual switch (DVS), **characterized in that** the virtual machines (VM1.1-VM3.2) are connected via a virtual Ethernet link, **in that** each instance of a distributed virtual switch (DVS) is configured to provide a virtualized access to the Ethernet network (ETH) for the virtual machines (VM1.1-VM3.2) of the respective system on a chip (SoC1-SoC3) and to provide a virtual Ethernet link to each virtual machine (VM1.1-VM3.2) of the respective system on a chip (SoC1-SoC3), and **in that** the switch (PCIe-SW) is a PCIe switch with or without a non-transparent bridge functionality.

2. The computing device (CD) according to claim 1, wherein the instances of the distributed virtual switch (DVS) are software components that are executed in a privileged mode.

3. The computing device (CD) according to claim 1 or 2, wherein each instance of the distributed virtual switch (DVS) is configured to discover the instances of the distributed virtual switch (DVS) of the other systems on a chip (SoC1-SoC3) via the switch (PCIe-SW) and to establish a dedicated communication channel to each other instance of the distributed virtual switch (DVS).

4. The computing device (CD) according to one of the preceding claims, wherein for each virtual Ethernet link the instances of the distributed virtual switch (DVS) are configured to handle frame transmission requests to local virtual machines (VM1.1-VM3.2) using data transfer.

5. The computing device (CD) according to claim 3, wherein for each virtual Ethernet link the instances of the distributed virtual switch (DVS) are configured to serve frame transmission requests to virtual machines (VM1.1-VM3.2) on a target system on a chip (SoC1-SoC3) by forwarding the request to the instance of the distributed virtual switch (DVS) on the target system on a chip (SoC1-SoC3) and providing frame metadata including a data source address, a destination address, or a VLAN tag.

6. The computing device (CD) according to one of the preceding claims, wherein the instances of the distributed virtual switch (DVS) are configured to provide a spatial isolation of the communication related to the virtual machines (VM1.1-VM3.2), or to provide a temporal isolation between the virtual machines (VM1.1-VM3.2) with regard to Ethernet communication.

7. The computing device (CD) according to one of the preceding claims, wherein the instances of the distributed virtual switch (DVS) are configured to scan outgoing and incoming Ethernet traffic from and to each virtual machine (VM1.1-VM3.2) for metadata.

8. The computing device (CD) according to one of the preceding claims, wherein the instances of the distributed virtual switch (DVS) are configured to scan ingress traffic and egress traffic and to perform plausibility checks.

9. The computing device (CD) according to one of the preceding claims, wherein the instance of the distributed virtual switch (DVS) of the system on a chip (SoC1) providing the connection to the Ethernet network (ETH) has exclusive access to an Ethernet network device.

10. The computing device (CD) according to one of the preceding claims, wherein for each virtual Ethernet link the instances of the distributed virtual switch (DVS) are configured to serve frame transmission request to the Ethernet network (ETH) by forwarding the request to the instance of the distributed virtual switch (DVS) of the system on a chip (SoC1) providing the connection to the Ethernet network (ETH).

11. The computing device (CD) according to one of the preceding claims, wherein the instance of the distributed virtual switch (DVS) of the system on a chip (SoC1) providing the connection to the Ethernet network (ETH) is configured to manage fetching data targeted to this Ethernet network (ETH) from local virtual machines (VM1.1-VM1.2) and from instances of the distributed virtual switch (DVS) of remote systems on a chip (SoC2-SoC3).

12. The computing device (CD) according to one of the preceding claims, wherein the instance of the distributed virtual switch (DVS) of the system on a chip (SoC1) providing the connection to the Ethernet network (ETH) is configured to serve received frames from the Ethernet network (ETH) to local virtual machines (VM1.1-VM1.2) using data transfer and to remote virtual machines (VM2.1-VM3.2) by forwarding the frame metadata to the instance of the distributed virtual switch (DVS) of the target system on a chip (SoC2-SoC3).

13. A vehicle, **characterized in that** the vehicle comprises a computing device (CD) according to one of the preceding claims.
